# FASCICULE DE BREVET EUROPEEN

(11) **EP 2 739 936 B1**
(45) Date de publication et mention de la délivrance du brevet: **16.09.2015**
(21) Numéro de dépôt: 12741362.3
(22) Date de dépôt: 03.08.2012
(51) Int. Cl.: G01B 9/02, G01B 11/30

(54) **PROCEDE DE MESURE ABSOLUE DE LA PLANEITE DES SURFACES D'ELEMENTS OPTIQUES**
VERFAHREN ZUR ABSOLUTEN MESSUNG DER PLANHEIT VON OBERFLÄCHEN OPTISCHER ELEMENTE
METHOD FOR THE ABSOLUTE MEASUREMENT OF THE FLATNESS OF THE SURFACES OF OPTICAL ELEMENTS

(30) Priorité: 05.08.2011 FR 1157207
(43) Date de publication de la demande: 11.06.2014
(73) Titulaire: Commissariat à l'Énergie Atomique et aux Énergies Alternatives, 75015 Paris (FR)
(72) Inventeur: BOUILLET, Stéphane, F-40410 Liposthey (FR); MORIN, Chloé, F-33120 Arcachon (FR)
(74) Mandataire: Ahner, Philippe
(86) Numéro de dépôt international: PCT/EP2012/065275
(87) Numéro de publication internationale: WO 2013/020925

(56) Documents cités:
- US-A- 6 018 990
- KLAUS R. FREISCHLAD: "Absolute interferometric testing based on recontruction of rotational shear", APPLIED OPTICS, vol. 40, no. 10, 1 avril 2001 (2001-04-01) , pages 1637-1648, XP002669754, cité dans la demande
- MAURIZIO VANNONI AND GIUSEPPE MOLESINI: "Iterative algorithm for three flat test", OPTICS EXPRESS, vol. 15, no. 11, 18 mai 2007 (2007-05-18), pages 6809-6816, XP002669755, cité dans la demande

## Description

### DOMAINE TECHNIQUE

La présente invention concerne un procédé de mesure absolue de la planéité des surfaces d'éléments optiques, de préférence au moyen d'un interféromètre de type Fizeau.

Elle s'applique notamment à la mesure absolue de la planéité de composants optiques de grande taille, par exemple des composants optiques de 800 mm de diamètre, destinés à constituer des composants de référence que l'on utilise ensuite pour un contrôle de planéité d'autres composants optiques.

### ÉTAT DE LA TECHNIQUE ANTÉRIEURE

Avec un interféromètre de type Fizeau, les mesures de surfaces optiques par réflexion sont relatives à une surface de référence, ou plan de référence (en anglais, *reference flat*). Cependant, les défauts de ce dernier peuvent ne pas être négligeables par rapport à ceux des surfaces optiques que l'on mesure.

On connaît plusieurs méthodes de métrologie absolue, permettant de s'affranchir des défauts de la surface de référence On connaît en particulier la méthode des trois plans (en anglais, *three-flat method*) par le document suivant auquel on se reportera :
G. Schulz et J. Schwider, « Interferometric testing of smooth surfaces », Progress in Optics, E. Wolf, ed. (North-Holland), vol. XIII, ch. IV (1976**).**
   La méthode des trois plans est à la base d'un grand nombre de méthodes de métrologie absolue. A ce sujet, on se reportera par exemple aux documents suivants :
C. Ai et J.C. Wyant, « Absolute testing of flats by using even and odd functions », Appl. Opt., vol. 32, 4698-4705 (1993**)**
K.R. Freischlad, "Absolute interferometric testing based on reconstruction of rotational shear", Appl. Opt., vol. 40, 1637-1648 (2011**).**

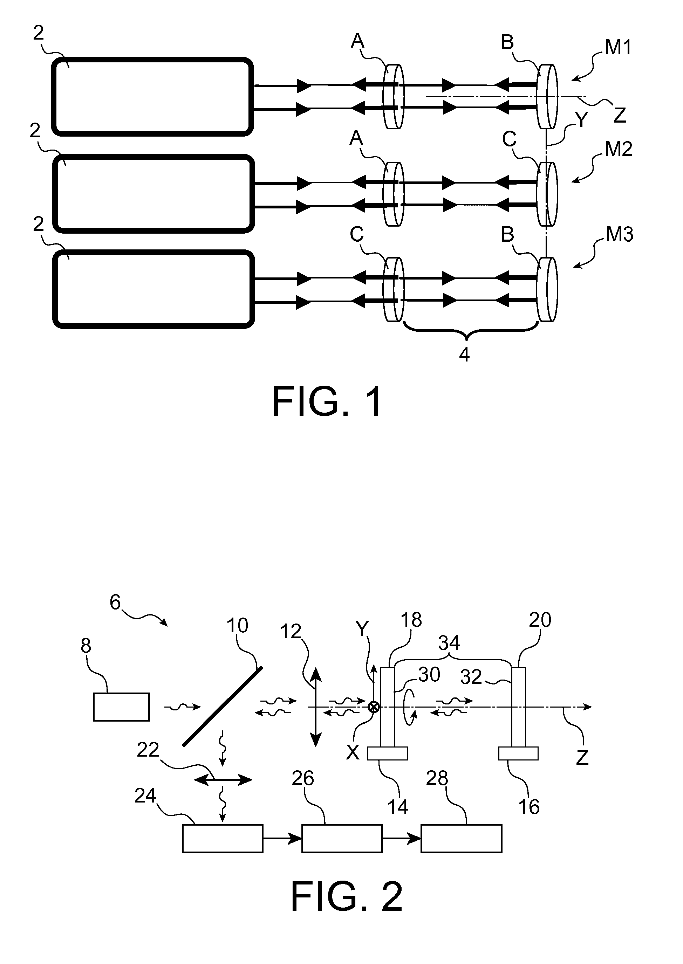

La méthode des trois plans est très schématiquement illustrée par la figure 1. Selon cette méthode, on effectue trois mesures M1, M2, M3 au moyen d'un interféromètre de Fizeau 2 et de trois composants optiques tels que des lames (en anglais, *plates*) A, B, C par exemple. Dans l'exemple illustré par la figure 1, les composants A et C sont partiellement réfléchissants.

Dans la première mesure M1, deux surfaces respectives, ou plans, des composants A et B sont en regard l'une de l'autre dans l'interféromètre 2 pour définir une cavité optique 4. Comme on le voit, dans la deuxième mesure M2, le composant B est remplacé par le composant C ; et dans la troisième mesure, le composant B reste en place mais le composant A est remplacé par le composant C.

Les trois mesures fournissent respectivement trois interférogrammes que l'on traite pour mesurer de façon absolue les surfaces en regard.

Toutefois, pour observer la même face du composant C entre la deuxième et la troisième mesure, on voit qu'il faut retourner ce composant C selon un axe vertical Y (rotation de 180° autour de l'axe Y).

A cause de ce retournement, seule la partie paire des défauts de l'élément retourné est invariante entre ces deux mesures M2 et M3. On ne peut donc connaître de manière absolue que la partie paire des défauts du composant C par rapport à l'axe vertical Y. En d'autres termes, seuls les défauts qui sont invariants par rotation de 180° autour de l'axe Y peuvent être connus de façon absolue.

Dans d'autres méthodes, on ajoute des mesures que l'on fait après avoir effectué des translations et/ou des rotations de l'un des composants optiques. A l'aide d'algorithmes utilisant des transformées de Fourier par exemple, il est alors possible de caractériser les trois plans de manière absolue. Ces méthodes sont cependant souvent très complexes à mettre en oeuvre.

Une autre méthode, qui est très différente des précédentes (qui sont analytiques), utilise un algorithme itératif pour reconstruire les trois plans à partir d'un ensemble de mesures. Cette autre méthode est connue par le document suivant auquel on se reportera :
M. Vannoni et G. Molesini, « Iterative algorithm for three flat test », Opt. Express, vol. 15, 6809-6816 (2007**).**

Cette autre méthode utilise trois composants optiques virtuels dont les surfaces (virtuelles) d'intérêt sont initialement parfaitement planes. La reconstruction des défauts est ensuite effectuée par itération de trois étapes principales :
- une étape de simulation des mesures dans laquelle les mesures d'interférométrie sont simulées mathématiquement à partir des composants virtuels,
- une étape d'estimation des erreurs dans laquelle les mesures simulées sont comparées aux mesures réelles, effectuées avec les trois composants optiques (réels) de référence sur le banc de mesures optiques comportant l'interféromètre de Fizeau, et
- une étape d'attribution des erreurs dans laquelle les erreurs sont attribuées aux trois surfaces virtuelles respectives des trois composants virtuels.

En fait, la méthode qui est décrite dans le document [4] utilise un ensemble de quatre mesures, à savoir les mesures effectuées avec les trois combinaisons de base, telles que les combinaisons A-B, A-C et C-B de la figure 1, ainsi qu'une quatrième mesure faite après avoir effectué une rotation de l'un des composants mesurés, autour de l'axe de mesure (horizontal) de l'interféromètre, noté Z sur la figure 1.

Avec l'ensemble des quatre mesures proposées dans ce document [4], la qualité de la reconstruction des composants de référence est insuffisante. De plus, la mise en oeuvre de la méthode, à savoir le choix des mesures à effectuer et le traitement de ces mesures, n'est pas précisée dans le document [4].

### EXPOSÉ DE L'INVENTION

La présente invention a pour but de remédier aux inconvénients précédents. Elle propose un procédé de mesure absolue permettant une reconstruction de meilleure qualité que le procédé connu par le document [4].

Pour ce faire, la présente invention utilise non pas quatre mesures mais au moins cinq mesures, à savoir les mesures effectuées avec les trois combinaisons de base et au moins deux mesures supplémentaires.

De façon précise, la présente invention a pour objet un procédé de mesure absolue de la planéité des surfaces d'éléments optiques dans lequel :
- on utilise un interféromètre ayant un axe de mesure et comportant une position de surface de référence et une position de surface de test pour mettre en oeuvre la méthode des trois plans à l'aide de trois éléments optiques, en effectuant des mesures réelles sur ceux-ci, les mesures réelles fournissant respectivement des interférogrammes, et
- on reconstruit les plans respectifs des trois éléments optiques par un traitement itératif dans lequel les mesures réelles sont simulées mathématiquement et les mesures simulées sont comparées aux mesures réelles,

et dans lequel chaque mesure réelle est effectuée en plaçant les plans respectifs de deux des trois éléments optiques en regard l'un de l'autre, respectivement dans la position de surface de référence (surface au niveau de laquelle la lumière est transmise partiellement) et dans la position de surface de test (surface utilisée en réflexion),
caractérisé en ce qu'au moins l'une des mesures réelles est faite après avoir effectué une rotation autour de l'axe de mesure, et une autre mesure réelle est faite après avoir effectué une translation perpendiculairement à l'axe de mesure, de l'un des deux éléments optiques par rapport à l'autre.

Selon un mode de réalisation préféré du procédé, objet de l'invention, l'interféromètre est un interféromètre de type Fizeau.

Selon un mode de réalisation préféré de l'invention, on effectue au moins deux rotations autour de l'axe de mesure, et les angles respectifs des deux rotations diffèrent l'un de l'autre de plus de 10°.

De préférence, chaque rotation est effectuée selon un angle qui n'est pas un sous-multiple de 360°.

Selon l'invention, il est en outre préférable de déterminer un décalage en translation dans un plan perpendiculaire à l'axe de mesure et un décalage en rotation autour de ce dernier, décalages qui sont susceptibles d'affecter les éléments optiques entre deux mesures réelles, en vue de recaler celles-ci l'une par rapport à l'autre.

On peut en outre avantageusement déterminer le décalage en grandissement (en anglais, *zoom*) dans le plan perpendiculaire à l'axe de mesure, qui est également susceptible d'affecter les éléments optiques entre deux mesures réelles.

Selon un mode de réalisation préféré de l'invention, en vue de déterminer les décalages, on divise les interférogrammes des deux mesures réelles en plusieurs parties, on calcule les produits de corrélation entre les parties correspondantes, on détermine les positions respectives des pics de corrélation correspondant aux produits de corrélation et l'on détermine chaque décalage à partir des positions respectives ainsi déterminées.

De préférence, chaque interférogramme est alors divisé en neuf parties qui forment une matrice 3x3.

De préférence également, au lieu d'utiliser directement lesdites parties, on détermine les gradients de ces parties et l'on calcule les produits de corrélation entre les gradients correspondants.

De plus, on détermine de préférence la position de chaque pic de corrélation par un calcul barycentrique.

### BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :
- la figure 1 illustre schématiquement la méthode des trois plans et a déjà été décrite,
- la figure 2 illustre schématiquement un interféromètre de type Fizeau qui est utilisable dans la présente invention pour effectuer les mesures,
- la figure 3 montre trois cartes d'erreurs qui mettent en évidence l'intérêt de l'invention,
- la figure 4 montre les profils des densités spectrales de puissance de ces cartes d'erreurs, et
- la figure 5 illustre schématiquement des décalages de pics de corrélation qui sont susceptibles d'affecter des interférogrammes subdivisés en plusieurs parties, lors de décalages en translation, en grandissement ou en rotation d'éléments optiques entre deux mesures.

### EXPOSÉ DÉTAILLÉ DE MODES DE RÉALISATION PARTICULIERS

La figure 2 est une vue très schématique d'un interféromètre connu 6, de type Fizeau, que l'on peut utiliser pour mettre en oeuvre un exemple du procédé de mesure absolue, objet de l'invention.

Comme on le voit sur la figure 2, cet interféromètre 6 comprend :
- une source lumineuse 8,
- un miroir semi-réfléchissant 10,
- une optique de collimation 12,
- deux dispositifs 14 et 16 prévus pour maintenir respectivement des éléments optiques (par exemple des lames), tels que les éléments 18 et 20, que l'on veut mesurer de manière absolue,
- une optique de focalisation 22,
- une caméra CCD 24 permettant la formation d'interférogrammes,
- un ordinateur 26 pour traiter ces interférogrammes et
- un dispositif 28 pour afficher les résultats obtenus au moyen de l'ordinateur 26.

En fait, on mesure de façon absolue les surfaces respectives 30 et 32, ou plans (en anglais, *flats*), des éléments 18 et 20. Ces surfaces verticales 30 et 32 définissent une cavité optique 34 et occupent respectivement une position de surface de référence et une position de surface de test dans l'interféromètre 6.

On précise que les éléments optiques, destinés à être maintenus par le dispositif 14, sont partiellement réfléchissants.

L'axe de mesure horizontal de l'interféromètre a la référence Z sur la figure 2. On définit aussi deux autres axes, à savoir un axe horizontal X et un axe vertical Y qui forment un trièdre trirectangle avec l'axe Z. Les surfaces 30 et 32 sont parallèles au plan défini par les axes X et Y.

Le dispositif 14 est également prévu pour déplacer l'élément 18 qu'il maintient (et donc la surface correspondante 30) en rotation autour de l'axe Z et en translation parallèlement à l'axe X et à l'axe Y, et donc perpendiculairement à l'axe Z.

Dans l'exemple considéré du procédé de mesure absolue, objet de l'invention, on utilise donc l'interféromètre 6 pour mettre en oeuvre la méthode des trois plans à l'aide de trois éléments optiques, en effectuant des mesures réelles sur ceux-ci, mesures qui fournissent respectivement des interférogrammes.

Chaque mesure réelle est effectuée en plaçant les plans respectifs de deux des trois éléments optiques en regard l'un de l'autre, respectivement dans la position de surface de référence et dans la position de surface de test.

En outre, on reconstruit les plans respectifs des trois éléments optiques par un traitement itératif dans lequel les mesures réelles sont simulées mathématiquement et les mesures simulées sont comparées aux mesures réelles, comme l'enseigne le document [4].

L'objectif étant d'avoir une précision élevée donnée sur les cartographies absolues des surfaces mesurées des éléments optiques tels que les éléments 18 et 20 de la figure 2, on a réalisé un certain nombre de simulations de manière à optimiser la qualité de reconstruction des cartographies absolues de ces surfaces.

On a étudié (par ordinateur) le comportement de l'algorithme, connu par le document [4], pour différents protocoles expérimentaux, de la façon suivante : définition de 3 plans initiaux virtuels comportant des défauts - simulation d'un protocole expérimental (mesures correspondant aux trois combinaisons de base et mesures supplémentaires) - obtention d'un ensemble d'interférogrammes virtuels - reconstruction par la méthode connue par le document [4] - obtention de trois plans reconstruits - comparaison de ceux-ci aux 3 plans initiaux virtuels pour obtenir 3 cartes d'erreurs.

Aux mesures correspondant aux trois combinaisons de base, on a ajouté des mesures pour lesquelles l'un des éléments optiques subit des rotations autour de l'axe Z et des translations perpendiculairement à cet axe.

La comparaison entre les plans initiaux virtuels et les plans reconstruits se fait par simple soustraction (en retranchant, pixel par pixel, un plan reconstruit au plan initial virtuel correspondant). On obtient ainsi les cartes d'erreurs qui permettent d'étudier facilement la qualité de reconstruction de l'algorithme connu par le document [4].

Les simulations effectuées ont ainsi conduit à ajouter au moins deux mesures à celles qui correspondent aux trois combinaisons de base (A-B, A-C, C-B sur la figure 1) pour améliorer la qualité de la reconstruction. Dans l'exemple de la figure 2, chaque mesure supplémentaire est faite après avoir effectué une rotation de l'élément 18 autour de l'axe Z et une translation de cet élément perpendiculairement à cet axe.

On a trouvé qu'il était préférable d'effectuer une ou plusieurs rotations autour de l'axe Z et en outre une translation perpendiculairement à cet axe, et même au moins deux rotations plus cette translation. Cette dernière permet d'améliorer la qualité de la reconstruction au centre des éléments optiques.

De manière à réduire les effets de symétrie sur les cartes d'erreur, il est également préférable que les angles des rotations soient bien distincts les uns des autres, c'est-à-dire diffèrent de plus de 10° les uns des autres, et qu'aucun des angles ne soit un sous-multiple de 360° ; à titre d'exemple, chaque angle est choisi de façon à être différent de valeurs telles que 30°, 60°, 90° ° et 180°.

Par exemple, sur les cartes d'erreurs, on a pu voir qu'ajouter une rotation de 90° donnait une erreur résiduelle ayant une symétrie de 90°, d'où l'exclusion d'une telle valeur.

En revenant à l'exemple de la figure 2, en vue de réduire l'influence des défauts du dispositif 14 qui permet les rotations de l'élément optique qu'il maintient, on a choisi d'effectuer trois rotations ayant respectivement des angles de 37°, 110° et 168°.

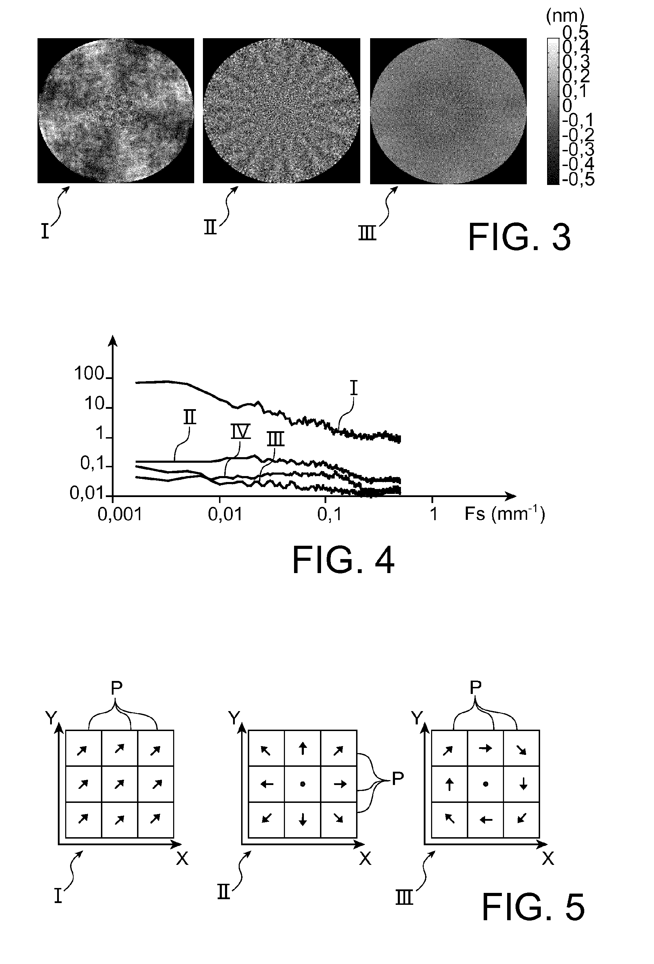

A titre d'exemple, la figure 3 montre des cartes d'erreurs que l'on a obtenues pour divers protocoles expérimentaux. La carte d'erreurs I correspond à une rotation de 90° (autour de l'axe Z), la carte II à trois rotations respectivement de 37°, 110° et 168°, et la carte III à trois rotations respectivement de 37°, 110° et 168° et une translation de 22 mm (perpendiculairement à l'axe Z).

Sur la figure 4, on a tracé les profils des densités spectrales de puissance (en anglais, *power spectral densities*) de ces cartes d'erreurs. Elles permettent de voir la répartition des fréquences spatiales des défauts non reconstruits. Ces fréquences spatiales Fs sont portées en abscisses ; et en ordonnées, les unités sont arbitraires.

Le profil I correspond à la rotation de 90°, le profil II aux trois rotations de 37°, 110° et 168° et le profil IV à ces trois rotations plus la translation de 22 mm. Le profil III correspond, quant à lui, à quatre rotations de 37°, 110°, 168° et 220°.

Les figures 3 et 4 montrent que l'ajout d'une translation aux rotations améliore la reconstruction et l'améliore plus que l'ajout d'une rotation, du moins dans un vaste domaine de fréquences spatiales (voir figure 4).

Grâce à des études complémentaires, on a remarqué que de faibles décalages (en rotation ou translation) des éléments optiques entre les mesures impliquaient une mauvaise reconstruction des hautes fréquences spatiales dans les cartographies reconstruites.

Pour remédier à ces décalages, on a mis en place des repères mécaniques sur les éléments optiques, du côté des surfaces à mesurer. Toutefois, malgré la mise en place de ces repères mécaniques au niveau des éléments optiques, de faibles décalages (inférieurs à un pixel, c'est-à-dire inférieurs à une valeur de l'ordre de 1 mm) des éléments entre les différentes mesures dans lesquelles ces éléments interviennent, ajoutent du bruit lors de la reconstruction.

De manière à optimiser cette dernière, on a donc cherché à supprimer ces décalages ou, plus précisément, à les déterminer en vue de recaler une mesure par rapport à une autre. Du fait des mesures effectuées, les décalages peuvent être des décalages en rotation et/ou en translation.

Le décalage en translation d'un élément optique entre deux mesures peut être évalué en effectuant un produit de corrélation entre ces deux mesures ou, plus précisément, entre les deux interférogrammes correspondants. En effet, la position du pic de corrélation obtenu nous permet de connaître le décalage de l'élément suivant l'axe X et suivant l'axe Y. Cependant, une telle méthode ne permet pas de déterminer les décalages en rotation (autour de l'axe Z) .

On a donc choisi de découper chaque mesure, ou plus exactement le résultat de celle-ci c'est-à-dire l'interférogramme lui correspondant, en neuf parties (référence P sur la figure 5) formant une matrice 3x3. On calcule alors les neuf produits de corrélation entre les parties correspondantes ; on détermine les neuf positions des pics de corrélation correspondant à ces produits ; et l'on détermine chaque décalage à partir de ces positions.

Pour ce faire, on calcule la moyenne arithmétique des neuf décalages élémentaires suivant X (respectivement Y), correspondant aux neuf parties, pour obtenir le décalage total en translation suivant X (respectivement Y).

Pour ce qui concerne le décalage en rotation, on considère les vecteurs tangentiels. Chacun de ceux-ci passe par le centre d'une partie et est perpendiculaire au vecteur radial correspondant. Et chacun des vecteurs radiaux passe par le centre de l'ensemble des neuf parties et par le centre d'une partie.

On détermine alors la projection de chaque décalage élémentaire sur le vecteur tangentiel correspondant ; et l'on calcule la moyenne arithmétique pondérée (par la distance entre les centres respectifs des parties et le centre de l'ensemble de ces parties) des projections ainsi déterminées pour obtenir le décalage en rotation.

Tout ceci est schématiquement illustré par la figure 5 dont la partie I est relative au décalage en translation et la partie III au décalage en rotation. La partie II est relative à un décalage en grandissement dont il sera question par la suite.

Pour avoir une meilleure précision sur les valeurs de décalage, il est préférable d'étudier les hautes fréquences des images. On calcule alors les neuf produits de corrélation entre les gradients des parties correspondantes (au lieu de les calculer entre les parties elles-mêmes).

Ensuite, la détermination de la position de chacun des pics de corrélation se fait par un calcul barycentrique pour avoir une précision sub-pixel sur la valeur du décalage. Et la détermination des décalages en translation et en rotation se fait encore par un calcul de moyennes comme on l'a vu plus haut.

Il est également possible de déterminer un décalage en grandissement entre deux mesures. Pour ce faire, on détermine la projection de chaque décalage élémentaire sur le vecteur radial correspondant ; et l'on calcule la moyenne arithmétique des projections ainsi déterminées pour obtenir le décalage en grandissement.

L'évaluation de ces décalages est utilisable lorsqu'on contrôle par exemple des miroirs plans au moyen d'éléments optiques servant de références, que l'on a mesuré conformément à l'invention.

Un tel contrôle se fait au moyen de l'interféromètre 6 ; et une seule mesure soustractive permet alors de comparer un miroir à un élément de référence et de voir si le miroir est acceptable ou non, en fonction de spécifications prédéfinies.

Dans une telle application, on a besoin d'évaluer les décalages. En effet, pour limiter le bruit, il est nécessaire de recaler le plus précisément possible la mesure sur la carte de référence (interférogramme de l'élément servant de référence) à utiliser. Pour ce faire, on a également besoin de connaître le décalage en grandissement. A partir des décalages sur les neuf parties, une projection selon les vecteurs radiaux permet d'évaluer le facteur de grandissement entre une mesure et une cartographie de référence.

La connaissance des décalages permet de recaler une mesure par rapport à l'autre. On peut alors concevoir un programme de recalage dans lequel on traite (par ordinateur) les interférogrammes obtenus, afin de déterminer les décalages, et l'on corrige ces interférogrammes pour tenir compte des décalages, ce qui permet de recaler les mesures l'une par rapport à l'autre.

La présente invention permet de qualifier des éléments optiques de toutes qualités et toutes tailles en vue de les utiliser comme références pour contrôler d'autres éléments optiques. L'invention permet ainsi d'utiliser des éléments optiques de référence de moins bonne qualité et donc moins coûteuses, tout en autorisant un processus de contrôle relativement rapide et précis.

En outre, le programme de recalage mentionné plus haut est très adapté à une telle application puisqu'il apporte un gain non négligeable sur la qualité des cartographies absolues.

Dans les exemples de l'invention donnés plus haut, on utilise un interféromètre de type Fizeau. Mais l'invention n'est pas limitée à ce type d'interféromètre : l'homme du métier peut adapter les exemples donnés à d'autres interféromètres, par exemple à un interféromètre de type Twyman-Green ou à un interféromètre de type Mach-Zehnder.

De même, l'invention n'est pas limitée à la subdivision des interférogrammes en neuf parties : l'homme du métier peut adapter les exemples donnés à l'utilisation d'autres subdivisions, par exemple des subdivisions en (2N+1)² parties, formant des matrices (2N+1)x(2N+1) où N est un nombre entier supérieur à 1.

## Revendications

1. Procédé de mesure absolue de la planéité des surfaces d'éléments optiques dans lequel :
- on utilise un interféromètre (6) ayant un axe de mesure (Z) et comportant une position de surface de référence et une position de surface de test pour mettre en oeuvre la méthode des trois plans à l'aide de trois éléments optiques, en effectuant des mesures réelles sur ceux-ci, les mesures réelles fournissant respectivement des interférogrammes, et
- on reconstruit les plans respectifs des trois éléments optiques par un traitement itératif dans lequel les mesures réelles sont simulées mathématiquement et les mesures simulées sont comparées aux mesures réelles,
et dans lequel chaque mesure réelle est effectuée en plaçant les plans respectifs de deux (18, 20) des trois éléments optiques en regard l'un de l'autre, respectivement dans la position de surface de référence et dans la position de surface de test,
**caractérisé en ce qu'** au moins l'une des mesures réelles est faite après avoir effectué une rotation autour de l'axe de mesure (Z), et une autre mesure réelle est faite après avoir effectué une translation perpendiculairement à l'axe de mesure, de l'un des deux éléments optiques par rapport à l'autre.

2. Procédé selon la revendication 1, dans lequel l'interféromètre est un interféromètre (6) de type Fizeau.

3. Procédé selon l'une quelconque des revendications 1 et 2, dans lequel on effectue au moins deux rotations autour de l'axe de mesure (Z) et les angles respectifs des deux rotations diffèrent l'un de l'autre de plus de 10°.

4. Procédé selon l'une quelconque des revendications 1 à 3, dans lequel chaque rotation est effectuée selon un angle qui n'est pas un sous-multiple de 360°.

5. Procédé selon l'une quelconque des revendications 1 à 4, dans lequel on détermine un décalage en translation dans un plan perpendiculaire à l'axe de mesure (Z) et un décalage en rotation autour de ce dernier, décalages qui sont susceptibles d'affecter les éléments optiques entre deux mesures réelles, en vue de recaler celles-ci l'une par rapport à l'autre.

6. Procédé selon la revendication 5, dans lequel on détermine en outre le décalage en grandissement dans le plan perpendiculaire à l'axe de mesure (Z), qui est également susceptible d'affecter les éléments optiques entre deux mesures réelles.

7. Procédé selon l'une quelconque des revendications 5 et 6, dans lequel on divise les interférogrammes des deux mesures réelles en plusieurs parties, on calcule les produits de corrélation entre les parties correspondantes, on détermine les positions respectives des pics de corrélation correspondant aux produits de corrélation et l'on détermine chaque décalage à partir des positions respectives ainsi déterminées.

8. Procédé selon la revendication 7, dans lequel chaque interférogramme est divisé en neuf parties qui forment une matrice 3x3.

9. Procédé selon l'une quelconque des revendications 7 et 8, dans lequel on détermine les gradients des parties et l'on calcule les produits de corrélation entre les gradients correspondants.

10. Procédé selon l'une quelconque des revendications 7 à 9, dans lequel on détermine la position de chaque pic de corrélation par un calcul barycentrique.

## Patentansprüche

1. Verfahren zur absoluten Messung der Planheit von Oberflächen optischer Elemente, bei dem:
- ein Interferometer (6) verwendet wird, das eine Messachse (Z) hat und eine Referenzoberflächenposition und eine Prüfoberflächenposition aufweist, um die Drei-Ebenen-Methode mit Hilfe von drei optischen Elementen einzusetzen, und zwar durch Durchführen von tatsächlichen Messungen an diesen, wobei die tatsächlichen Messungen jeweils Interferogramme liefern, und
- die jeweiligen Ebenen der drei optischen Elemente mittels einer iterativen Verarbeitung rekonstruiert werden, bei der die tatsächlichen Messungen mathematisch simuliert werden und die simulierten Messungen mit den tatsächlichen Messungen verglichen werden,
und bei dem jede tatsächliche Messung durchgeführt wird, indem die jeweiligen Ebenen von zwei (18, 20) der drei optischen Elemente einander gegenüberliegend angeordnet werden, und zwar in der Referenzoberflächenposition bzw. der Prüfoberflächenposition,
**dadurch gekennzeichnet, dass** zumindest eine der tatsächlichen Messungen vorgenommen wird, nachdem eine Drehung um die Messachse (Z) durchgeführt wurde, und eine weitere tatsächliche Messung vorgenommen wird, nachdem eine Translation senkrecht zur Messachse eines der zwei optischen Elemente bezüglich des anderen durchgeführt wurde.

2. Verfahren nach Anspruch 1, bei dem das Interferometer ein Fizeau-Interferometer (6) ist.

3. Verfahren nach einem der Ansprüche 1 und 2, bei welchem mindestens zwei Drehungen um die Messachse (Z) durchgeführt werden und die jeweiligen Winkel der zwei Drehungen sich voneinander um mehr als 10° unterscheiden.

4. Verfahren nach einem der Ansprüche 1 bis 3, bei dem jede Drehung gemäß einem Winkel durchgeführt wird, der kein Divisor von 360° ist.

5. Verfahren nach einem der Ansprüche 1 bis 4, bei dem eine translative Verschiebung in einer Ebene senkrecht zur Messachse (Z) und eine rotative Verschiebung um Letztere bestimmt wird, wobei diese Verschiebungen geeignet sind, um auf die optischen Elemente zwischen zwei tatsächlichen Messungen einzuwirken, und zwar im Hinblick darauf, um diese bezüglich einander neu einzurichten.

6. Verfahren nach Anspruch 5, bei dem außerdem eine vergrößernde Verschiebung in der Ebene senkrecht zur Messachse (Z) bestimmt wird, die gleichermaßen geeignet ist, um auf die optischen Elemente zwischen zwei tatsächlichen Messungen einzuwirken.

7. Verfahren nach einem der Ansprüche 5 und 6, bei dem die Interferogramme von zwei tatsächlichen Messungen in mehrere Teile unterteilt werden, die Korrelationsprodukte zwischen den entsprechenden Teilen berechnet werden, die jeweiligen Positionen der Korrelationsspitzen entsprechend den Korrelationsprodukten bestimmt werden, und jede Verschiebung ausgehend von den jeweiligen so bestimmten Positionen bestimmt wird.

8. Verfahren nach Anspruch 7, bei dem jedes Interferogramm in neun Teile unterteilt wird, die eine 3x3-Matrix bilden.

9. Verfahren nach einem der Ansprüche 7 und 8, bei dem die Gradienten der Teile bestimmt werden und die Korrelationsprodukte zwischen den entsprechenden Gradienten berechnet werden.

10. Verfahren nach einem der Ansprüche 7 bis 9, bei dem die Position jeder Korrelationsspitze mittels einer Schwerpunktberechnung bestimmt wird.

## Claims

1. A method for absolute measurement of the flatness of surfaces of optical elements wherein:
- an interferometer (6) having a measurement axis (Z) and including a reference surface position and a test surface position is used for applying the three-flat method by means of three optical elements, by conducting actual measurements on the latter, the actual measurements respectively providing interferograms, and
- the respective planes of the three optical elements are reconstructed by an iterative processing operation in which the actual measurements are mathematically simulated and the simulated measurements are compared with the actual measurements,
and wherein each actual measurement is carried out by placing the respective planes of two (18, 20) of the three optical elements facing each other, respectively in the reference surface position and in the test surface position,
**characterized in that** at least one of the actual measurements is made after having performed a rotation around the measurement axis (Z), and another actual measurement is made after having performed a translation perpendicularly to the measurement axis, of one of the two optical elements relatively to the other.

2. The method according to claim 1, wherein the interferometer is an interferometer (6) of the Fizeau type.

3. The method according to any of claims 1 and 2, wherein at least two rotations are performed around the measurement axis (Z) and the respective angles of both rotations differ from each other by more than 10°.

4. The method according to any of claims 1 to 3, wherein each rotation is performed according to an angle which is not a sub-multiple of 360°.

5. The method according to any of claims 1 to 4, wherein a translational shift is determined in a plane perpendicular to the measurement axis (Z) and a rotational shift is determined around the latter, shifts which may affect the optical elements between two actual measurements, with view to readjusting the latter relatively to each other.

6. The method according to claim 5, wherein the zoom shift is further determined in the plane perpendicular to the measurement axis (Z), which may also affect the optical elements between two actual measurements.

7. The method according to any of claims 5 and 6, wherein the interferograms of both actual measurements are divided into several portions, the correlation products between the corresponding portions are calculated, the respective positions of the correlation peaks corresponding to the correlation products are determined and each shift is determined from the thereby determined respective positions.

8. The method according to claim 7, wherein each interferogram is divided into nine portions which form a 3x3 matrix.

9. The method according to any of claims 7 and 8, wherein the gradients of the portions are determined and the correlation products between the corresponding gradients are calculated.

10. The method according to any of claims 7 to 9, wherein the position of each correlation peak is determined by a barycentric calculation.
